# EUROPEAN PATENT APPLICATION

(11) **EP 4 201 765 A1**
(43) Date of publication of application: **28.06.2023**
(21) Application number: 21217145.8
(22) Date of filing: 22.12.2021
(51) Int. Cl.: B60T 13/74, B60T 17/22, B60T 7/12, B60T 8/171, B60T 8/88

(54) **BRAKE SYSTEM FOR A COMMERCIAL VEHICLE**

(71) Applicant: Haldex Brake Products Aktiebolag, 261 24 Landskrona (SE)
(72) Inventor: FYHR, Pontus, 22653 Lund (SE)
(74) Representative: REHBERG HÜPPE + PARTNER

(57) **Abstract**

The present invention relates to a brake system (1) for a commercial vehicle. The brake system (1) comprises a brake device (2) (in particular a disc brake (3)) and a brake actuator (9) with a holding device (11). In a locked state the holding device (11) locks the brake actuator (9) so that an induced clamping stroke or brake force of the brake device (2) is upheld.

The inventive brake system (1) comprises safety circuitry (15). The safety circuitry (15) monitors if there is a failure in the brake system (1). In the case of detecting a failure in the brake system (1) the safety circuitry (15) transfers the holding device (11) from the locked state into an unlocked state. Accordingly, in the case of a failure in the brake system (1) an undesired locking by the holding device (11) of an applied brake device (2) is avoided.

## Description

### TECHNICAL FIELD OF THE INVENTION

The invention relates to a brake system for a commercial vehicle. The commercial vehicle is e.g. driven solely by electric energy, a hybrid vehicle driven both by electric energy as well as by a combustion engine or a vehicle driven by a combustion engine. To mention only some examples, the commercial vehicle might be a bus, a tractor and/or a trailer. The commercial vehicle might be driven by an autonomous driving system, in particular according to level 3, level 4 or level 5 of the international standard SAE for levels of autonomous driving. In the brake system of the commercial vehicle a brake force at at least one wheel end is generated (exclusively or cumulatively to a different type of brake device) by at least one electric brake device wherein a contact force between brake elements (in particular a brake pad and a brake disc) is controlled by an electric brake actuator.

### PRIOR ART

EP 1 302 371 A2 describes a known power supply system according to DE 197 55 050.9. In the power supply system power is supplied to an electro-motoric brake device by two redundant power sources by a common supply line. The redundant power sources guarantee that it is possible to operate the brake device also in case of a failure of one of the power sources. However, in case of a failure of the supply line (in particular a short-circuit or a rupture of the line) it is no longer possible to operate the brake device. EP 1 302 371 A2 suggests to connect the redundant power sources via redundant supply lines to electric ports of the brake device such that two separate circuits are used for supplying the brake device with electric power. The two circuits are separated by diodes. For one embodiment, a first power source is formed by a generator (e.g. with a supply voltage of 42 V) whereas the second power source is an accumulator (e.g. with a lower supply voltage of 14 V). Due to the redundant power supply, it is possible to reduce the wire cross-sectional area of the supply lines to 2/3 or to the half. In the case of using different nominal supply voltages of the power sources it is possible to transform the supply voltage to the other supply voltage by a DC/DC voltage transformer which can also be a bi-directional DC/DC transformer. When using a bi-directional DC/DC transformer, one of the two circuits can be prioritised so that a larger percentage of the supply power is supplied by this circuit. Any failure of one of the circuits can be brought to the attention of the driver by suitable acoustic or optical signal means. Also redundant control lines for controlling the operation of the electro-motoric brake device can be used.

US 2016/0072723 A1 discloses an electric drive unit including a motor having a stator with a winding wound around the stator and a rotor and a power converting device comprising a circuit for supplying electric power to the motor. The power converting device includes two power converting sections separated by a separating protrusion or wall. The power converting sections include semiconductor devices as MOSFETs used for converting a DC power input from a power source to three-phase AC power used for driving the different phases of the motor.

US 2004/0212250 A1 describes the problem that also in a redundant electric brake system problems might arise when an abnormality develops in a relay unit used for switching between the power supply from a main accumulator and an auxiliary accumulator. US 2004/0212250 A1 suggests an electric brake system with a plurality of power sources and a power breaker capable of insulating and separating a plurality of brake actuators into two separate brake system parts. Therefore, even when an abnormality develops, the brake system part wherein the abnormality occurs can be separated and the other brake system part can still be operated under use of the associated power source. For one embodiment proposed in US 2004/0212250 A1, the brake system includes a cut-off switch for dividing a power source line into a first power source line and a second power source line. A first and second voltage detection circuit detects a voltage in the associated power source line. The second power source line supplies driving power to the first voltage detection circuit, and the first power source line supplies driving power to the second voltage detection circuit. Even when an abnormality develops in the power source line, the cut-off switch cuts off the power source line. Then, the driving power is supplied from the power source line on the normal side to the voltage detection circuit that detects the voltage of the power source line on the abnormal side. Consequently, voltage detection can be continued. The cut-off state can be released as soon as an abnormality is eliminated. Furthermore, it is possible that a power breaker also includes a switch that is fused by thermal energy. Even when the cut-off switch does not operate as expected, the switch that is fused by thermal energy will be able to cut off the power source line. US 2004/0212250 A1 also suggests to use different power breakers having different current values as a power cut-off condition.

WO 2018/114275 A1 discloses an electric brake system comprising at least two electric power sources embodied as a capacitor-based power source and a recharging power source (preferably a chemical electric power source as an accumulator). These two different electric power sources have different dynamical characteristics, e.g. for fast power demands or recharging characteristics. Furthermore, the two different power sources provide different options for monitoring the charging level of the power source and involve different costs and lead to different operational safeties. A control device selectively activates one of the two different power sources according to the actual needs. A monitoring device monitors the charging level of the capacitor-based power source, in particular the voltage at the different plates of the capacitor, or monitors the flow of electric energy from the capacitor-based power source to the electric brake device or monitors the flow of electric energy from the recharging power source to the capacitor-based power source. Dependent on the result of the monitoring, a warning might be given to the driver when the charging level falls below a threshold charging level. It is possible to control the flow of energy between the power sources on the basis of the monitored charging level. Electric consumers not related to safety and to braking can be deactivated for a determined low charging level. Furthermore, the operation of the electric brake device can be adapted for a small charging level or for a charging level below a lower threshold. Here, an emergency brake actuation can be triggered for stopping the vehicle to still stand. It is possible that the monitoring device detects a failure of the capacitor-based power source and switches the power supply for the electric brake device to the supply by the recharging power source. Here, the failure of the capacitor-based power source can be detected on the basis of a fast decrease of the charging level, high currents between the capacitor plates or on the basis of an inappropriate recharging behaviour of the capacitor-based power source. For one embodiment the electric brake system can be operated in two different modes. In a higher energization mode the actuation of the electric brake actuator depends according to a given characteristic from the energization of the electric brake actuator. A higher brake application requires a higher energization of the brake actuator. Also for a constant high brake force a constant high energization of the brake actuator would be required. The publication proposes to provide a low energization mode. In the low energization mode the electric brake actuator is switched from the normal, energization-based mode for changing the brake actuation to a low energization brake holding mode, wherein the brake actuator is not energized proportional or corresponding to the characteristic for holding the brake force constant. Instead, a locking, fixing or holding device is actuated which under the consumption of a low energy level holds the previously achieved brake application at a constant level. In the case that a change of the brake application is required, the low energy mode or holding mode or fixation mode is terminated and the control logic switches back to the normal operation of the electric brake actuator, wherein the brake force again depends on the level of energization (high energization mode). The publication also proposes a recovery mode of the brake system wherein during a release of the electric brake actuators energy stored in the brake device or brake actuator can be recovered and returned to the capacitor-based power source. For one embodiment two capacitor-based power sources are associated to electric brake actuators on different vehicle sides of a respective vehicle axle. In a normal operational mode the two capacitor-based power-sources can be separated from each other and can each be responsible for the power supply for a respective wheel-end unit. Instead, in a failure mode one of the two capacitor-based power sources is connected to the electric brake actuators of both wheel-end units. It is possible that in the electric brake system the electric brake actuator generates an actuating force which is directly or indirectly transferred to the brake element, in particular the brake pad, so that the brake force at the brake element corresponds to or is proportional or dependent by any dependency on the actuating force of the brake actuator. A transmission or brake lever can be interposed between the electric brake actuator and the brake element as the brake pad. However, it has been shown that for some embodiments it can be advantageous to use a mechanical self-enforcing mechanism in the electric brake device (here reference is made to EP 1 977 134 B1 or US 2013/0008749 A1 disclosing a mechanical self-enforcing mechanism using ramps or other self-enforcing mechanisms used for brake devices according to the prior art). These self-enforcing mechanisms can be used for generating large brake forces with small actuating forces and/or for creating a non-linear force transfer characteristic between the actuation force and the brake force created by the brake element. However, also a "conventional" electric brake device can be used which comprises a plunger which is mechanically connected to a brake element as a brake pad for biasing the brake element. Any transmission units comprising a rotating brake lever and the like can be interposed between the electric brake actuator and the plunger. The publication also discloses to use a brake actuator having first and second windings. The first windings can (in particular during normal operating states) be supplied with power by the first capacitor-based power source. If there is an abnormality of the supply of the first windings from the first capacitor-based power source, the second capacitor-based power source or the recharging power source can be activated. In this case, the second capacitor-based power source or the recharging power source supplies the second windings of the electric brake actuator with power. Here, the different windings can be dimensioned specifically for the different operating conditions, namely the first windings for the normal operating states and the second windings for the abnormal operating states (e.g. for an emergency brake actuation, a parking of the vehicle and the like). Instead of an embodiment like this wherein the different windings are not used together in one and the same operating state it is also possible that in a "burst mode" the different windings of the electric brake actuator are energized at one and the same time so that the effects and the forces generated by these windings sum up. Here, it is possible that the two windings are powered by one and the same capacitor-based power source or that the windings are powered by different capacitor-based power sources.

### OBJECT OF THE INVENTION

It is the object of the present invention to provide a brake system for a commercial vehicle which is improved in particular with respect to
- the safety in the case of a failure in the brake system and/or
- the provision and/or controllability of the brake force also in the case of a failure and/or
- the control of the operating state of a holding device and/or
- the consideration of different types of failures and/or
- the provision of the driving stability and/or
- the provision of a safe parking and/or
- the options for considering a failure in a power supply, in the brake device, in the brake actuator or in the control or supply lines.

### SOLUTION

According to the present invention, the object of the invention is solved by the features of the independent claim. Additional preferred embodiments according to the invention are to be seen in the dependent claims.

### DESCRIPTION OF THE INVENTION

The present invention relates to a brake system for a commercial vehicle which comprises a brake device which generates a brake force dependent on a clamping stroke. Without this necessarily being the case the brake system might generally be embodied as described in the prior art documents mentioned in the beginning. The brake device might e.g. be a disc brake device comprising a brake disc and brake pads pressed against the brake disc for generating the brake force. The brake device might comprise any transmission (as e.g. a spindle drive for driving the brake pads or a brake lever). In the brake device the clamping stroke which induces the brake force might be (a level of) an actuating force. However, preferably the clamping stroke is a displacement of one of the components arranged in the transmission chain of the brake device for actuating the brake pads.

In the inventive brake system a brake actuator induces the clamping stroke of the brake device. Here, the induced clamping stroke depends on an electric energization of the brake actuator.

The brake system comprises a holding device. The holding device serves for maintaining a clamping stroke which has been induced by the brake actuator so that it is possible to decrease or even completely remove the electric energization of the brake actuator. For the prior art mentioned in the beginning, here in particular WO 2018/114275 A1, the locked state was proposed for providing a "low energy mode". Within the present invention the holding device might also serve for providing a "low energy mode". It is also possible that by one brake device kept at a constant brake level by the holding device in the locked state a "base level" of a brake force component of the vehicle can be provided whereas (e.g. by another brake actuator and another brake device at another wheel end) an additional constant or dynamic or modulated brake force component of the vehicle can be provided (without an associated holding device of the other brake actuator being present or being in the locked state) so that different brake units provide different functions: a first brake unit with its holding device in the locked state provides a constant brake force component (constant base level) and the other second brake unit without a holding device being in a locked state provides a changing or even modulated brake force component of the vehicle. To mention another non-limiting example the brake unit with the holding device in a locked state might serve for providing a stopping brake force when the vehicle is temporarily stopped (e.g. at the traffic lights or another temporary stop) or this brake unit serves for providing a parking force (which might be induced manually by the driver or automatically by a vehicle control system or an automatic driving system). It is also possible that the brake unit with the holding device in the locked state maintains an emergency brake force for bringing the vehicle to stop in the case of a failure or an emergency.

For the embodiment of the holding device there are a lot of options within the frame of the invention. Preferably, the holding device fixes a position of one component in the drive train comprising the brake actuator and the brake device for creating the brake force. To mention only some non-limiting examples the holding device might be embodied as a holding disc brake which in a locked state brakes a rotating component of the drive train (e.g. brakes an electric shaft, disc or gearwheel of the electric motor or of a transmission element against the fixed housing). The holding device might be based on fixing the component by friction (as being the case for a holding disc brake). However, the fixing might also be provided by a latching or locking. It is e.g. possible that the electric motor or a transmission component comprises a toothed wheel and the holding device in the locked state engages the toothed wheel with a latching or locking element for blocking a rotation of the toothed wheel. The holding device might fix the position in the locked state in a stepped fashion (e.g. as explained by use of the toothed wheel) or in a step-less fashion (as being the case for the example of the holding disc brake).

When the holding device is locked, the brake device might be released. However, preferably the brake device is (partially or completely) applied in the locked state.

The brake device and/or the brake actuator and/or the holding device might together form a brake unit, wherein the different components are integrated into a common housing or embodied as modules which are flanged to one another.

Preferably, a brake unit of this type is a wheel-end unit. A wheel-end unit is directly attached to a vehicle wheel or its brake disc on one side of the vehicle or might be arranged adjacent the wheel (preferably with a distance from the wheel center axis of less than 2.0 m or less than 1.0 m or less than 0.5 m) or at the wheel end. The wheel-end unit might be fixed to an axle body, to the chassis or to a brake caliper.

The inventive brake system comprises a safety circuitry. The safety circuitry covers any electric passive circuit wherein different switching states for achieving the functions described in the following are achieved in a passive way dependent on the electric operational states as the voltages and/or currents in the safety circuitry. Preferably, the circuitry is or comprises an electronic control unit, printed circuit board, ECU and the like wherein the switching and the provision of the different functions and states is provided on the basis of an electronic control by use of a processor. Here, the circuitry can be provided by a single unit or printed circuit board, by different modules directly fixed to each other or connected to each other by wirings and lines or by distributed sub-components. In the case of the use of an electronic control the states and functions explained in the following can be provided by the use of a control logic executed by the electronic control unit.

In the inventive brake system the safety circuitry monitors the brake system if there is a failure in the brake system. In the case that the safety circuitry detects a failure in the brake system the safety circuitry controls the holding device into a desired state, for ensuring that the brake device is in a desired state.

For one embodiment of the invention the desired state is the unlocked state so that the safety circuitry provides that the holding device is in the unlocked state. For that aim the safety circuitry transfers the holding device from the locked state into an unlocked state. In the case that at the instance of detecting a failure the holding device is already in the unlocked state the safety circuitry maintains the unlocked state of the holding device, i.e. avoids a switching from the unlocked state to the locked state.

The invention bases e. g. on the finding that for some embodiments the holding device is always in the locked state when not being energized. This might be advantageous for saving energy when the locked state has to be upheld for longer time periods (e.g. when using the brake unit in the locked state for a parking brake function). Depending on the failure, the holding device is controlled into a desired state. The safety circuitry can only hold the holding device in the unlocked state for a short period of time, given by the capacity of the power source used by the safety circuitry. If the detected failure is that another power supply is lost at high vehicle speed, the holding device can be unlocked by the safety circuit such that the braking device can be released. The holding device then assumes the locking state again, once the power source is depleted. However, the brake is then kept released.

In the case that during the drive an occurring failure has the effect that the holding device is no longer energized the brake unit might be locked due to the power failure so that the brake unit can no longer be controlled for providing a controllable brake force and/or an unintended brake force is upheld. In this case, the inventive safety circuitry guarantees that (despite of the failure in the power supply) the brake unit remains in or is transferred into the unlocked state.

The brake force can then e.g. be controlled by other brake units which are not affected by the failure.

It is possible that the safety circuitry provides the unlocked state of the holding device when detecting any kind of failure in the brake system. For one proposal of the invention in the inventive brake system the safety circuitry comprises a failure classification circuitry. The failure classification circuitry classifies an existing and detected failure into different failure categories, namely at least a first failure category and a second failure category. On the basis of this classification then the safety circuitry controls the state of the holding device: The safety circuitry transfers the holding device from the locked state into a unlocked state or maintains the unlocked state of the holding device only when the existing failure is classified in the first failure category. Instead, when the existing failure is classified in the second failure category the safety circuitry does not change or control the locked state of the holding device.

This embodiment of the invention in particular bases on the finding that failures in a first failure category might be critical for providing the driving safety, for providing the required brake force and/or for providing stable driving and braking conditions. For failures in the first failure category no further safe control of the brake unit might be possible. Instead, for failures of the second failure category the brake unit might still be able to provide the required (constant or changing) brake force or is still able to provide a reduced brake force above a threshold level. It might also be possible that for a failure of the second failure category the brake force can only be provided with a slower response or dynamic. In the case of a failure in the second failure category other measures than influencing the state of the holding device can be taken. It is e.g. possible that in this case a warning (e.g. an acoustic warning and/or an optical warning) can be given to the driver.

The invention covers a number of options for the way how the failure classification circuitry determines the failure categories. To mention only some non-limiting examples the failures can be distinguished between the first failure category and the second failure category on the basis of different failure types or different types of failure signals. It is e.g. possible that the failure categories correspond to different failure qualities. If e.g. a power supply, a supplied voltage or a current is no longer available, the failure is classified in the first failure category. However, in the case that a wheel speed signal, a steering angle signal, a measured brake force signal and the like is no longer available the failure might be classified in the second failure category. However, it is (alternatively or cumulatively) also possible that the classification bases on a quantitative analysis. Accordingly, in the case that a supply voltage, a current, a control current or a power level of a power source drops below a critical threshold the failure is classified in the first failure category whereas otherwise the failure is classified in the second failure category. Another option for the classification is that the classification bases on a comparison of or the ratio of
- the measured vehicle or wheel deceleration, the clamping force or brake force of the brake unit or the whole brake system
- and the brake request (e.g. set by the driver or an autonomous vehicle driving system or a cruise control).

In the case that the correlation or ratio is within a predefined interval or above a threshold the failure might be a non-critical failure so that the failure is classified in the second failure category
- otherwise the failure is classified in the first failure category. In practice, the classification might be based on a plurality of conditions and states wherein it is also possible that the classification bases both on a qualitative analysis of the failure as well as on a quantitative analysis.

For one embodiment of the invention the safety circuitry also monitors a speed. The speed might be the wheel speed of a vehicle wheel associated with the brake unit, the speed of the brake disc or a tone wheel or the speed of the vehicle. For this embodiment the safety circuitry only transfers the holding device from the locked state into an unlocked state if two conditions are fulfilled, namely a failure in the brake system is detected and the speed is above a speed threshold. This embodiment bases on the finding that in some cases the locking of the holding device due to the failure can be accepted when the vehicle is at a low speed so that an undesired level of the brake force of the brake unit has no severe or negative effects on the driving stability. Instead, for a speed above the speed threshold the inventive measures of guaranteeing the unlocked state of the holding device will be used.

For an extreme case the speed threshold might be the zero threshold. For this embodiment the transfer of the holding device into the unlocked state is avoided in a parking situation or stop situation with a zero speed. When the brake unit serves for providing the parking brake force and there is a failure in the brake system, in this situation the automatic transfer of the holding device into the unlocked state might cause problems because in the unlocked state the required parking brake force can no longer be guaranteed.

For another embodiment the brake system comprises a brake mode detection circuitry. The brake mode detection circuitry monitors if the brake system is in a service brake mode or in a parking brake mode. In the case that the safety circuitry detects a failure in the brake system the safety circuitry transfers the holding device from the locked state into the unlocked state if the brake system is in the service brake mode. In this case the holding device might be a bistable holding device which without any energization upholds both the locked state as well as the unlocked state. Accordingly, in this case the clamping stroke respectively the brake force is not locked. Instead, the brake force of the brake unit can be changed and in particular the brake unit is deactivated. This is in particular the case during driving of the commercial vehicle which might also cover a temporary stop e.g. at traffic lights. However, in the case that the safety circuitry detects a failure in the brake system and at this instance the brake system is in the parking brake mode, the safety circuitry maintains the holding device in the locked state so that the parking brake force is not affected by the safety circuitry for providing the safe parking.

However, another issue is a loss of power such that the service brake is anyway not available. In this case the holding device can be locked (as long as the brake device has first been released).

The brake mode detection circuitry might determine the service brake mode and the parking brake mode on the basis of a speed sensor. Alternatively or cumulatively the brake mode detection circuitry might detect a parking brake mode on the basis of the ignition, a driver seat occupancy sensor, on the basis that the vehicle door is opened, on the basis of a parking brake switch and the like.

For an inventive brake system a safety power source might (additionally to at least one main power source) be provided. The safety power source provides electric energy for operating the brake system, in particular the safety circuitry and/or the holding device, the failure classification circuitry and/or the brake mode detection circuitry in the case of a failure of the main power source of the brake system. Accordingly, a redundant power supply is provided. Here, it is possible that the safety power source is integrated into an axle control module and the brake unit associated with the wheel end is supplied with power from the safety power source via the axle control module. In the case that the axle control module is connected to different wheel-end units in particular of one axle two safety power sources can be provided, each of the safety power sources being responsible for supplying safety power to one (or both) wheel-end units. For another embodiment the axle control module comprises one single safety power source which serves as an alternative power source for both wheel-end units. The safety power source might also be responsible for supplying an additional electronic control unit, a wheel speed sensor, a brake caliper control module, the brake actuator or a control unit for controlling the brake actuator with electric power. The safety circuitry may also be provided inside the housing of the brake device or adjacent thereto.

The safety power source might be of any known type. Preferably, the safety power source is a rechargeable power source. For one proposal of the invention the safety power source is a capacitor. Here, any type of capacitor might be used, in particular a so-called super-capacitor or ultra-capacitor. The capacitor might be formed by a single couple of capacitor plates or by a package of a plurality of single sub-capacitors. To mention only one non-limiting example, the sub-capacitors might be capacitors of the type distributed under the label "Maxwell BCAP 0310" having a voltage per cell of 2.7 V, 309.96 Farad per cell, an energy of 1129.804 J per cell, an energy of 0.313835 Wh per cell and a weight per cell of 60 g. At least five, at least ten, at least fifteen or at least twenty cells of this or another type can be used as sub-capacitors of the capacitor.

For a particular embodiment the safety circuitry comprises a safety switch. The safety switch can be embodied as a mechanical switch, a relay switch or an electric switch which is controlled between the two switching states dependent on a control signal at a control port, in particular due to the energization of a solenoid actuator of the switch. Preferably, the safety switch is embodied as a transistor. The safety switch is arranged between the safety power source and the holding device. The safety switch is switched from an open state to a closed state when the safety circuitry detects a failure in the brake system. For one embodiment the safety switch is normally open so that without any energization the safety switch automatically takes the open position. In the open position the safety power source and the holding device are not connected to each other so that the holding device is not energized. In the not energized state the holding device might be in the locked state. By switching the safety switch from the open state to the closed state the holding device can be energized which leads to a transfer of the holding device from the locked state into the unlocked state. It is also possible that the normally open state of the safety switch is achieved by a mechanical spring biasing the switch into the open position. Furthermore, it is also possible that the safety switch is bistable, so that without an energization the switch keeps the present state so that both the open switching state as well as the closed switching state are stable.

For an alternative or cumulative embodiment the safety circuitry comprises a speed switch. For the speed switch and the different types of switches and control options the aforementioned said for the safety switch correspondingly applies. Also the speed switch might be normally open. The speed switch is arranged between the safety power source and the holding device. The speed switch is switched from an open state to a closed state when the speed is above the speed threshold. In this way by use of the speed switch it is possible to provide that the transfer of the holding device into the unlocked state is only performed when the speed is above the speed threshold (see the explanations above).

By an embodiment wherein both the speed switch as well as the safety switch are arranged between the safety power source and the holding device in a series connection it is in a very simple fashion possible to provide that the automatic transfer of the holding device into the unlocked state requires that two conditions (namely the condition "speed above the speed threshold" and the condition "detection of a failure") are fulfilled.

As explained above, for one embodiment of the invention it is possible that the safety switch and/or the speed switch is/are switched into the closed position by an electronic control unit powered by the safety power source or by another power source. Here, the electronic control being responsible for the control of the speed switch and/or the safety switch might be provided by an electronic control unit which also controls the brake actuator, so an electronic control unit integrated into the brake unit, a control unit of an axle control module or any other electronic control unit. This electronic control unit can be powered in a normal operating mode by a main power source whereas the electronic control unit might be powered by the safety power source in the case of a failure or an emergency.

For providing the electronic control it is possible that at least one of the safety switch and the wheel speed switch comprises an electric control port. In this case the switch can be switched into the closed position with an energization of the electric control port by the responsible electronic control unit.

The present invention covers an embodiment wherein the above applies for one single brake unit with its brake device, brake actuator and holding device whereas possible further brake units are not affected by the inventive features and the above described functions. For another embodiment of the invention the brake system comprises a second brake device and a second brake actuator, in particular integrated into a second brake unit which might be a second wheel-end unit. In the case of detecting a failure in the brake system by the safety circuitry and the transfer of the holding device from the locked state into the unlocked state as described above, for one particular embodiment of the invention a change of the second electric energization of the second brake unit is triggered for achieving a change of the second brake stroke of the second brake unit. This triggered change might serve for adjusting the brake force at the second brake unit to the released first brake unit. The change might here be an increase or a decrease of the brake force of the second brake unit. Here, the triggering and the change of the brake force at the second brake unit might be controlled by a control unit of at least one of the brake units. Preferably, the triggering and change of the second brake stroke is controlled by the axle control module and/or a central control unit, in particular used for an autonomous driving system.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE FIGURE

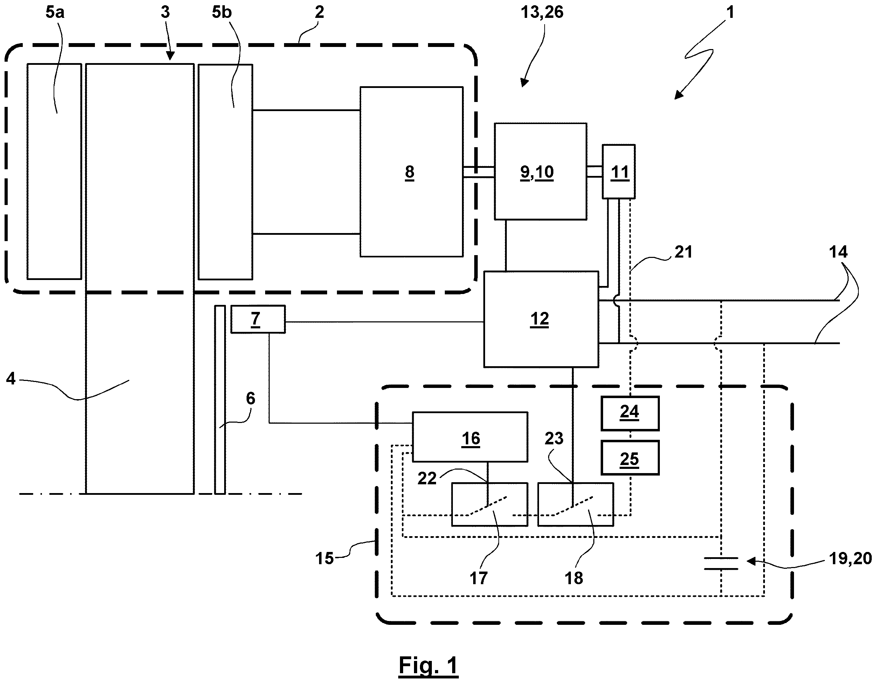

In the following, the invention is further explained and described with respect to preferred exemplary embodiments illustrated in Fig. 1 which schematically shows a brake system.

### DESCRIPTION OF THE FIGURE

Fig. 1 schematically shows a brake system 1. The brake system 1 comprises a brake device 2. For the shown embodiment the brake device 2 is embodied as a disc brake 3. The disc brake 3 comprises a brake disc 4 and brake pads 5a, 5b which can be held by a brake caliper and which are pressed with a clamping force against the brake disc 4. The friction between the brake pads 5 and the brake disc 4 creates the brake force of the brake device 2. The brake disc 4 might comprise a toothed wheel or tone wheel 6 of a wheel speed sensor 7. In the nomenclature of the present application/patent the brake device 2 also includes a mechanism or transmission 8 which serves for transmitting, transferring and gearing-up or gearing-down an actuation force and an actuation movement. The transmission 8 might be an integral part of the brake device 2 or a module flanged to another module of the brake device 2.

The actuation force and actuation movement of the brake device 2 is created by an electric brake actuator 9. Preferably, the actuator 9 is embodied as an electric motor 10.

A holding device 11 serves for fixing a clamping stroke of the brake actuator 9, a component of the transmission 8 or of the drive train between the brake actuator 9 and the brake pads 5. Without this necessarily being the case, in the embodiment of Fig. 1 the holding device 11 is attached to or integrated into the brake actuator 9. Here, the holding device 11 locks a rotational position of a motor shaft of the electric motor 10, the holding device 11 comprising a holding brake which brakes the motor shaft of the electric motor 10 against the housing.

The brake system 1 comprises an electronic control unit 12. The electronic control unit 12 might be a brake control unit only responsible for controlling the brake unit 13 shown in Fig. 1. However, the electronic control unit 12 might also be arranged remote from the wheel-end unit and e.g. be integrated into a central or remote axle control unit being responsible for the control of two wheel-end units or might be a electronic control unit 12 of another wheel-end unit.

The electronic control unit 12 controls the operation of the brake actuator 9 for inducing a clamping stroke and so the brake force of the brake device 2 according to the brake demand. Here, the brake demand might be set by the driver, in particular via a brake pedal. However, it is also possible that the brake demand is set by an autonomous driving system, a cruise control system and the like.

Furthermore, the electronic control unit 12 is responsible for controlling the holding device 11 into an unlocked state and a locked state. In the unlocked state the holding device 11 does not fix the drive train, here the brake actuator 9. Accordingly, the drive train can be moved for changing the clamping stroke so that dependent on the energization of the brake actuator 9 by the electronic control unit 12 the clamping stroke and the brake force can be changed. Instead, in the locked state of the holding device 11 the holding device 11 fixes the drive train, here the electric motor 10 so that a constant clamping stroke and a constant brake force are upheld. This applies even when the energization of the brake actuator 9 by the electronic control unit 12 is reduced. The holding device 11 might also lock the brake device 2 in a released state.

The electronic control unit 12 is supplied with electric power by a main power supply 14. The power supply to the brake actuator 9 and the holding device 11 is controlled by the electronic control unit 12.

The signal of the wheel speed sensor 7 is transmitted to the electronic control unit 12 for further processing and consideration.

The brake system 1 comprises a safety circuitry 15 which is here embodied separately from the aforementioned components but connected to the same by the required electric lines. The safety circuitry 15 comprises an electronic control unit 16. The signal of the wheel speed sensor 7 is transmitted to the electronic control unit 16. The safety circuitry 15 comprises a speed switch 17 and a safety switch 18. Furthermore, the safety circuitry 15 comprises a safety power source 19, here embodied as a capacitor 20. The safety power source 19 is charged by the main power supply 14. The safety power source 19 serves for providing power to the electronic control unit 16. Furthermore, the safety power source 19 serves for providing a power control signal to the holding device 11. The speed switch 17 and the safety switch 18 are integrated in a series connection into a control line 21 between the safety power source 19 and the holding device 11.

For the shown embodiment the speed switch 17 and the safety switch 18 are in the open switching state without an energization of an electronic control port 22, 23 by the electronic control unit 16 respectively 12 (without this necessarily being the case). In the case that the electronic control unit 16 receives a wheel speed from the wheel speed sensor 7 being above a predefined threshold the electronic control unit 16 generates a control signal at the control port 22 which closes the speed switch 17. Without a closure of the safety switch 18, the control line 21 and so the holding device 11 is not powered by the safety power source 19. However, in the case that the electronic control unit 12 also detects a failure in the brake system 1, the electronic control unit 12 also generates a control signal at the control port 23 which closes the safety switch 18. In the closed state of both the speed switch 17 and the safety switch 18 the holding device 11 is energized via the control line 21. In the not energized state the holding device 11 is in the locked state. Accordingly, the transfer of the switches 17, 18 transfers the holding device 11 into the unlocked state.

The safety circuitry 15 might optionally (alternatively or cumulatively) comprise a failure classification circuitry 24 and/or a brake mode detection circuitry 25. The failure classification circuitry 24 and/or the brake mode detection circuitry 25 might operate similar to the switches 17, 18 for allowing the energization of the holding device 11 dependent on further conditions, here a monitored and detected brake mode as a service brake mode or parking brake mode or a monitored and classified failure classification.

The embodiment of Fig. 1 is only very schematic and only shows an example. The different shown components might be integrated into one and the same unit or different units and might be positioned adjacent to each other or remote from each other. For a preferred embodiment the brake device 2 (except the brake disc 4), the transmission 8, the brake actuator 9 and the holding device 11 (optionally together with the wheel speed sensor 7 and/or the electronic control unit 16 and/or the safety circuitry 15) form a brake unit 13 wherein the components are integrated into one common housing or are embodied as modules flanged to each other. Preferably, a brake unit 13 of this type is embodied as a wheel-end unit 26.

It is possible that one single axle of the commercial vehicle comprises two wheel-end units 26a, 26b. In this case one wheel-end unit 26a is associated with a left wheel of the axle whereas the other wheel-end unit 26b is associated with a right wheel of the axle. In this case the operation of the two wheel-end units 26a, 26b might be coordinated by an axle control module which might be integrated into one of the wheel-end units 26 or might be separate from the wheel-end units 26. However, it is (alternatively or cumulatively) possible that the wheel-end unit 26 communicates with other wheel-end units 26 or other units for a transmission of measurement signals, control signals, data and/or a power supply.

It is possible that (as shown in Fig. 1) that there are two separate electronic control units 12, 16. However, the described functionality might also be integrated into one single electronic control unit which can then be used in a multifunctional way.

The brake system 1 is in particular used in combination with an autonomous vehicle driving system of the commercial vehicle. The autonomous vehicle driving system in particular is an autonomous vehicle driving system of the level 3, level 4 or level 5.

The holding device 11 is envisioned as a normally locked device, but it is also possible that it is normally unlocked, requiring energization to lock, and the holding device 11 can also be a bistable device, being energized in order to switch from an unlocked to a locked state, and vice versa.

The inventive measures can be combined with the embodiments known from the prior art, in particular with the embodiments described in the prior art documents mentioned in the beginning.

### LIST OF REFERENCE NUMERALS

- 1: brake system
- 2: brake device
- 3: disc brake
- 4: brake disc
- 5: brake pad
- 6: toothed wheel
- 7: wheel speed sensor
- 8: transmission
- 9: brake actuator
- 10: electric motor
- 11: holding device
- 12: electronic control unit
- 13: brake unit
- 14: main power supply
- 15: safety circuitry
- 16: electronic control unit
- 17: speed switch
- 18: safety switch
- 19: safety power source
- 20: capacitor
- 21: control line
- 22: control port
- 23: control port
- 24: failure classification circuitry
- 25: brake mode detection circuitry
- 26: wheel-end unit

## Claims

1. A brake system (1) for a commercial vehicle comprising
a) a brake device (2) which generates a brake force dependent on a clamping stroke,
b) a brake actuator (9) which induces the clamping stroke of the brake device (2) dependent on an electric energization and
c) a holding device (11) which in a locked state maintains the clamping stroke which has been induced by the brake actuator (9) when the electric energization of the brake actuator (9) is at least decreased,
**characterized in that**
d) a safety circuitry (15) is provided, the safety circuitry (15)
da) monitoring if there is a failure in the brake system (1) and
db) in the case of detecting a failure in the brake system (1) controlling the holding device (11) into a desired state, for ensuring that the brake device (2) is in a desired state.

2. The brake system (1) of claim 1, **characterized in that** the safety circuitry (15) in the case of detecting a failure in the brake system (1) transfers the holding device (11) from the locked state into an unlocked state or maintains the unlocked state of the holding device (11).

3. The brake system (1) of claim 2, **characterized in that**
a) the safety circuitry (15) comprises a failure classification circuitry (24) which classifies an existing failure into a first failure category or a second failure category and
b) the safety circuitry (15) transfers the holding device (11) from the locked state into an unlocked state or maintains the unlocked state of the holding device (11) only when the existing failure is classified in the first failure category.

4. The brake system (1) of one of the preceding claims, **characterized in that**
a) the safety circuitry (15) also monitors a speed and
b) the safety circuitry (15) only transfers the holding device (11) from the locked state into a unlocked state if both
ba) a failure in the brake system (1) is detected as well as
bb) the speed is above a speed threshold.

5. The brake system (1) of one of the preceding claims, **characterized in that**
a) the brake system (1) comprises a brake mode detection circuitry (25) which monitors if the brake system (1) is in
aa) a service brake mode or
ab) a parking brake mode and
b) the safety circuitry (15) in the case of detecting a failure in the brake system (1)
ba) transfers the holding device (11) from the locked state into the unlocked state if the brake system (1) is in the service brake mode and
bb) maintains the holding device (11) in the locked state if the brake system (1) is in the parking brake mode.

6. The brake system (1) of one of the preceding claims, **characterized in that** a safety power source (19) is provided which provides electric energy for operating the brake system (1), in particular the safety circuitry (15), the failure classification circuity and/or brake mode detection circuitry (25) in the case of a failure of the main power source (14) of the brake system (1).

7. The brake system (1) of claim 6, **characterized in that** the safety power source (19) is a capacitor (20).

8. The brake system (1) of claim 6 or 7, **characterized in that** the safety circuitry (15) comprises a safety switch (18) arranged between the safety power source (19) and the holding device (11), the safety switch (18) being switched from an open state to a closed state when the safety circuitry (15) detects a failure in the brake system (1).

9. The brake system (1) of one of claims 6 to 8 when directly or indirectly referring back to claim 3, **characterized in that** the safety circuitry (15) comprises a speed switch (17) arranged between the safety power source (19) and the holding device (11), the speed switch (17) being switched from an open state to a closed state when the speed is above the speed threshold.

10. The brake system (1) of claim 9 when referring back to claim 8, **characterized in that** the speed switch (17) and the safety switch (18) are arranged between the safety power source (19) and the holding device (11) in a series connection.

11. The brake system (1) of one of claims 6 to 10, **characterized in that** the safety switch (18) and/or the speed switch (17) are/is switched into the closed position by an electronic control unit (12; 16) powered by the safety power source (19).

12. The brake system (1) of one of claims 6 to 11, **characterized in that** at least one of the safety switch (18) and the wheel speed switch (17)
a) comprises an electric control port (22; 23) and
b) is switched into the closed position with an energization of the electric control port (22; 23).

13. The brake system (1) of one of the preceding claims, **characterized by**
a) a second brake device (2) which generates a second brake force dependent on a second clamping stroke and
b) a second brake actuator (9) which induces the second clamping stroke of the second brake device (2) dependent on a second electric energization,
c) the detection of a failure in the brake system (1) by the safety circuitry (15) and the transfer of the first holding device (11) from the locked state into the unlocked state triggering a change of the second electric energization leading to a change of the second brake stroke.

14. The brake system (1) of one of the preceding claims, **characterized in that**
a) an electronic control unit of the brake system (1) generates a failure signal which is transferred to the safety circuitry (15),
b) upon receipt of the failure signal the safety circuitry (15) transfers the holding device (11) from the locked state into the unlocked state.
